# EUROPÄISCHE PATENTSCHRIFT

(11) **EP 4 200 662 B1**
(45) Veröffentlichungstag und Bekanntmachung des Hinweises auf die Patenterteilung: **17.12.2025**
(21) Anmeldenummer: 21762691.0
(22) Anmeldetag: 16.08.2021
(51) Int. Cl.: G02C 5/22

(54) **ZENTRALTEIL FÜR EIN BRILLENSCHARNIER UND BRILLE MIT EINEM SOLCHEN ZENTRALTEIL**
CENTRAL PART FOR AN EYEGLASS HINGE, AND EYEGLASSES HAVING A CENTRAL PART OF THIS TYPE
PIÈCE CENTRALE D'UNE CHARNIÈRE DE LUNETTES ET LUNETTES DOTÉES D'UNE TELLE PIÈCE CENTRALE

(30) Priorität: 21.08.2020 DE 102020210683
(43) Veröffentlichungstag der Anmeldung: 28.06.2023
(73) Patentinhaber: OBE GmbH & Co. KG, 75228 Ispringen (DE)
(72) Erfinder: WIENICKE, Frank, 75217 Birkenfeld (DE)
(74) Vertreter: Kordel, Mattias
(86) Internationale Anmeldenummer: PCT/EP2021/072765
(87) Internationale Veröffentlichungsnummer: WO 2022/038103

(56) Entgegenhaltungen:
- EP-A1- 0 266 307
- WO-A1-2018/084772
- LU-B1- 100 476
- US-A- 5 606 743

## Beschreibung

Die Erfindung betrifft ein Zentralteil für ein Brillenscharnier sowie eine Brille mit einem solchen Zentralteil.

Brillen mit elektronischen Funktionen, wie beispielsweise Datenbrillen, Brillen für augmentierte Realität, auch bekannt als AR-Brillen, oder Brillen für virtuelle Realität, auch bekannt als VR-Brillen, gewinnen zunehmend an Bedeutung. Bei einer solchen Brille ist typischerweise ein elektronisches Funktionselement, beispielsweise eine Displayeinrichtung oder dergleichen, in einen Rahmen der Brille integriert oder an dem Rahmen angeordnet, wobei eine Steuereinrichtung, beispielsweise ein Controller und/oder eine elektrische Speichereinrichtung, beispielsweise eine Batterie oder ein Akkumulator, in einen Brillenbügel der Brille integriert oder an dem Brillenbügel angeordnet ist. Es bedarf dann einer energie- und/oder datenübertragenden Verbindung zwischen dem Brillenbügel einerseits und dem Rahmen andererseits. Hierfür kann ein Kabel vorgesehen sein, sei es ein elektrisches Kabel oder ein optisches Kabel, welches über ein Scharnier geführt werden muss, das den Brillenbügel mit dem Rahmen verbindet. Herkömmliche Brillen und Brillenscharniere sind zu diesem Zweck kaum verwendbar und auch nur schwer oder mit erheblichem Aufwand entsprechend nachrüstbar. Insbesondere besteht Bedarf an einer Kabelführung über das Scharnier, welche einfach ausgestaltet ist, das Kabel insbesondere vor Einwirkungen von außerhalb der Brille schützt, wobei aber gleichwohl eine einfache Montierbarkeit sowie auch Demontierbarkeit, insbesondere zu Wartungszwecken, für die Brille gewährleistet sein soll. Zugleich sollen scharniertypische Funktionen wie eine möglichst akkurate Definition verschiedener Funktionsstellungen für den Brillenbügel, insbesondere einer Ruhestellung und einer Tragestellung, gewährleistet sein. Wünschenswert ist allgemein auch die Verwirklichung eines sogenannten Schnappeffekts, wobei der Brillenbügel selbsttätig in zumindest eine der genannten Funktionsstellungen verlagert wird, sobald er einen bestimmten Grenzwinkelbereich relativ zu dem Rahmen erreicht oder überschreitet.

WO 2018/084772 A1 offenbart ein bekanntes Brillenscharnier.

Der Erfindung liegt die Aufgabe zugrunde, ein Zentralteil für ein Brillenscharnier sowie eine Brille mit einem solchen Zentralteil zu schaffen, wobei zumindest in gewissem Umfang Vorteile gegenüber herkömmlichen Brillenscharnieren gegeben sind, wobei insbesondere zumindest einer der zuvor genannten Aspekte verwirklicht ist.

Die Aufgabe wird gelöst, indem die vorliegende technische Lehre bereitgestellt wird, insbesondere die Lehre der unabhängigen Ansprüche sowie der in den abhängigen Ansprüchen und der Beschreibung offenbarten Ausführungsformen.

Die Aufgabe wird insbesondere gelöst, indem ein Zentralteil für ein Brillenscharnier geschaffen wird, welches einen ersten Anlenkbereich aufweist, der eingerichtet ist, um das Zentralteil um eine erste Gelenkachse gelenkig mit einem Rahmen einer Brille zu verbinden. Das Zentralteil weist einen zweiten Anlenkbereich auf, der eingerichtet ist, um das Zentralteil um eine zweite Gelenkachse gelenkig mit einem Brillenbügel der Brille zu verbinden. Das Zentralteil weist außerdem eine es senkrecht zu den Gelenkachsen durchdringende Kabelführungsausnehmung auf, die eingerichtet ist, um ein Kabel von dem Brillenbügel zu dem Rahmen durch das Zentralteil hindurchzuführen, insbesondere ein elektronisches Kabel oder ein optisches Kabel, insbesondere ein Kabel zur Energie- und/oder Datenübertragung. Die Kabelführungsausnehmung ist in Richtung der Gelenkachsen zumindest einseitig offen. Mit dem hier vorgeschlagenen Zentralteil kann insbesondere eine einfache und zugleich schonende sowie sichere Führung eines Kabels von dem Brillenbügel zu dem Rahmen bereitgestellt werden.

Dabei ist eine das Zentralteil aufweisende Brille insbesondere leicht zu montieren, indem das Zentralteil in dem ersten Anlenkbereich gelenkig mit dem Rahmen verbunden wird, wobei es in dem zweiten Anlenkbereich gelenkig mit dem Brillenbügel verbunden wird. Somit wird zugleich ein Brillenscharnier für die Brille gebildet, wobei der Rahmen, der Brillenbügel und das Zentralteil gemeinsam das Brillenscharnier bilden.

Das Kabel wird schon dadurch geschont, dass eine Schwenkbewegung des Brillenbügels relativ zu dem Rahmen von einer Ruhestellung in eine Tragestellung und zurück in zwei Teil-Schwenkbewegungen aufgeteilt wird, nämlich eine erste Teil-Schwenkbewegung des Zentralteils relativ zu dem Rahmen um die erste Gelenkachse, und eine zweite Teil-Schwenkbewegung des Brillenbügels relativ zu dem Zentralteil um die zweite Gelenkachse. Um den vollen Schwenkwinkel des Brillenbügels relativ zu dem Rahmen von typischerweise ungefähr 90° zu verwirklichen, bedarf es bezüglich der beiden Teil-Schwenkbewegungen jeweils nur eines deutlich reduzierten Schwenkwinkels, insbesondere - bei symmetrischer Aufteilung der Schwenkbewegung in die beiden Teil-Schwenkbewegungen - einer jeweiligen Teil-Schwenkbewegung von ungefähr 45°. Somit wird das Kabel im Bereich eines Übergangs von dem Brillenbügel zu dem Zentralteil einerseits sowie von dem Zentralteil zu dem Rahmen andererseits jedenfalls um weniger als 90° gebogen, vorzugsweise jeweils um ungefähr 45°.

Weiterhin schützt das Zentralteil das Kabel vorteilhaft insbesondere vor Einwirkungen von außerhalb der Brille.

Die Schwenkbewegung des Brillenbügels relativ zu dem Rahmen erfolgt bevorzugt um eine gedachte Scharnierachse, die in dem Scharnier nicht materiell ausgebildet oder manifestiert ist. Vielmehr ergibt sich die Schwenkbewegung um die gedachte Schwenkachse durch die bevorzugt zwangsgeführte Bewegung des Brillenbügels relativ zu dem Rahmen, die gegeben ist durch die beiden Teil-Schwenkbewegungen um die beiden Gelenkachsen. Es ist aber auch möglich, dass sich die Schwenkbewegung komplexer darstellt, insbesondere als Überlagerung aus einer Mehrzahl von Bewegungen, wobei insbesondere die gedachte Scharnierachse selbst nicht raumfest ist, sondern sich entlang einer bestimmten Bahn verlagert.

Das hier vorgeschlagene Zentralteil ist vorteilhaft einfach und kostengünstig herstellbar sowie leicht an einer Brille montierbar, insbesondere indem der erste Anlenkbereich mit dem Rahmen und der zweite Anlenkbereich mit dem Brillenbügel verbunden wird.

Da die Kabelführungsausnehmung zumindest einseitig offen ausgebildet ist, kann das Kabel für die Montage des Zentralteils leicht in dieses eingeführt werden, indem es von der offenen Seite her in die Kabelführungsausnehmung eingelegt wird. Es bedarf also insbesondere keines komplizierten Einfädelns oder Hindurchfädelns des Kabels in oder durch die Kabelführungsausnehmung. Diese Ausgestaltung erleichtert darüber hinaus ganz besonders eine Demontage der Brille, wobei das Kabel weder von dem Rahmen und dem Brillenbügel noch von einer elektrischen oder elektronischen Komponente getrennt werden muss, um das Zentralteil von der Brille und insbesondere dem Kabel zu entfernen. Vielmehr kann das Zentralteil über die einseitig offene Kabelführungsausnehmung einfach von dem Kabel seitlich abgezogen werden, was insbesondere eine Wartung oder Veränderung der Brille deutlich erleichtert.

Gemäß einer bevorzugten Ausgestaltung ist das Zentralteil einteilig ausgebildet. Die Montage und Demontage des Zentralteils ist besonders einfach, wenn dieses einteilig ausgebildet ist. Dass das Zentralteil einteilig ausgebildet ist, bedeutet insbesondere, dass das Zentralteil lediglich aus einem Grundkörper besteht, der insbesondere die beiden Anlenkbereich und die Kabelführungsausnehmung aufweist. Insbesondere ist das Zentralteil bevorzugt materialeinheitlich ausgebildet.

Insbesondere aufgrund der leichten Montier- und Demontierbarkeit des Zentralteils ist dieses ohne weiteres auch bei bestehenden Brillen nachrüstbar. Darüber hinaus weist es ein universell einsetzbares, unauffälliges Design auf.

Gemäß einer Weiterbildung der Erfindung ist vorgesehen, dass das Zentralteil eine in an der Brille montiertem Zustand dem Gesicht eines Trägers der Brille zugewandte Innenseite und einem dem Gesicht des Trägers abgewandte Außenseite aufweist.

Die Richtungsangaben und räumlichen Orientierungsbegriffe, die hier und im Folgenden verwendet werden, beziehen sich bevorzugt auf eine Anordnung des Zentralteils und der Brille an dem Gesicht eines Trägers der Brille, kurz Brillenträger, in bestimmungsgemäßem Zustand, bei aufrechter, stehender Körperhaltung mit Geradeausblick des Brillenträgers. Dabei bedeutet "innen" "dem Gesicht des Brillenträgers zugewandt", "außen" "dem Gewicht des Brillenträgers abgewandt", "oben" "geodätisch oben" und "unten" "geodätisch unten".

Die Kabelführungsausnehmung ist bevorzugt zu der Außenseite hin geschlossen. Insbesondere weist das Zentralteil bevorzugt eine Außenwandung auf, welche die Kabelführungsausnehmung nach außen hin begrenzt. Hierdurch ist das Kabel in besonders günstiger Weise vor Einwirkungen von außerhalb der Brille geschützt, sowohl in der Tragestellung als auch insbesondere in der Ruhestellung, wenn die Außenseite des Zentralteils aufgrund des gegen den Rahmen eingeklappten Brillenbügels nach außen hin exponiert ist.

Die Tragestellung des Brillenbügels ist insbesondere eine solche Funktionsstellung, in der der Brillenbügel in einem Winkel von ungefähr 90° zu dem Rahmen angeordnet ist, derart, dass ein Brillenträger die Brille aufsetzen und tragen kann. Die Ruhestellung ist demgegenüber eine Funktionsstellung, in welcher der Brillenbügel sich ungefähr parallel zu dem Rahmen erstreckt und derart eingeklappt ist, dass die Brille zum einen nicht getragen, zum anderen aber sicher beispielsweise in einem Brillenetui verstaut und transportiert werden kann.

Die Kabelführungsausnehmung ist bevorzugt zu der Innenseite hin geschlossen. Insbesondere weist das Zentralteil bevorzugt eine Innenwandung auf, welche die Kabelführungsausnehmung nach innen begrenzt. Insbesondere ist die Kabelführungsausnehmung bevorzugt sowohl zu der Außenseite als auch zu der Innenseite hin geschlossen. Insbesondere weist das Zentralteil bevorzugt sowohl die Außenwandung als auch die Innenwandung auf.

In einer Ausführungsform des Zentralteils ist vorgesehen, dass das Zentralteil an der Außenseite, insbesondere an der Außenwandung, mindestens eine Kühlstruktur, insbesondere mindestens eine Kühlrippe, vorzugsweise eine Mehrzahl von Kühlrippen, aufweist. Dies ermöglicht eine sehr effiziente Wärmeabfuhr von einem elektronischen Funktionselement einer das Zentralteil aufweisenden Brille.

Alternativ oder zusätzlich weist das Zentralteil bevorzugt an der Innenseite, insbesondere an der Innenwandung, mindestens eine Kühlstruktur, insbesondere mindestens eine Kühlrippe, vorzugsweise eine Mehrzahl von Kühlrippen, auf. Auch diese Ausgestaltung trägt zu einer effizienten Wärmeabfuhr von einem elektronischen Funktionselement einer das Zentralteil aufweisenden Brille bei. In bevorzugter Ausgestaltung weist das Zentralteil die mindestens eine Kühlstruktur sowohl an der Außenseite als auch an der Innenseite, insbesondere sowohl an der Außenwandung als auch an der Innenwandung. auf.

Gemäß einer Weiterbildung der Erfindung ist vorgesehen, dass das Zentralteil zumindest in einem Anlenkbereich, der ausgewählt ist aus dem ersten Anlenkbereich und dem zweiten Anlenkbereich, ein erstes Rastelement aufweist, das eingerichtet ist, um die Ruhestellung des Brillenbügels festzulegen. Das Zentralteil weist in dem zumindest einen Anlenkbereich weiterhin ein zweites Rastelement auf, das eingerichtet ist, um die Tragestellung des Brillenbügels festzulegen. Das erste Rastelement und das zweite Rastelement ermöglichen in vorteilhafter Ausgestaltung ein zumindest leichtes Einrasten des Brillenbügels und/oder des Rahmens einerseits in der Ruhestellung und andererseits in der Tragestellung. Auf diese Weise werden vorteilhaft akkurat definierte Funktionsstellungen für den Brillenbügel relativ zu dem Rahmen erreicht. Bevorzugt kann mithilfe der Rastelemente insbesondere im Zusammenwirken mit einem geeignet ausgestalteten, federbelasteten Gegenrastelement an zumindest einem der Brillenelemente ein Schnappeffekt erreicht werden, wobei der Brillenbügel ab Erreichen eines vorbestimmten Grenzwinkelbereichs selbsttätig in die nächstliegende Funktionsstellung gedrängt wird, ohne dass es einer weiteren Interaktion des Brillenträgers bedarf. In besonders bevorzugter Ausgestaltung ist das Zentralteil zwischen dem ersten Rastelement und dem zweiten Rastelement derart ausgestaltet, dass quasi ein Potentialmaximum überwunden werden muss, damit das Gegenrastelement von dem ersten Rastelement zu dem zweiten Rastelement gelangen kann, wobei es jeweils nach Überwinden des Potentialmaximums in das jeweilige Rastelement gedrängt wird.

Gemäß einer Weiterbildung der Erfindung ist vorgesehen, dass wenigstens ein Rastelement, ausgewählt aus dem ersten Rastelement und dem zweiten Rastelement, als Rastausnehmung ausgebildet ist. Die stellt eine besonders einfache und einfach herzustellende Ausgestaltung des Rastelements dar. Bevorzugt ist das Rastelement als kreisrunde, bevorzugt muldenförmige Rastausnehmung ausgebildet.

Gemäß einer Weiterbildung der Erfindung ist vorgesehen, dass das Zentralteil sowohl in dem ersten Anlenkbereich als auch in dem zweiten Anlenkbereich jeweils ein erstes Rastelement zur Definition der Ruhestellung des Brillenbügels und jeweils ein zweites Rastelement zur Definition der Tragestellung des Brillenbügels aufweist. Insbesondere ist in dem ersten Anlenkbereich ein erstes erstes Rastelement zur Definition der Ruhestellung und ein erstes zweites Rastelement zur Definition der Tragestellung angeordnet. In dem zweiten Anlenkbereich ist ein zweites erstes Rastelement zur Definition der Ruhestellung und ein zweites zweites Rastelement zur Definition der Tragestellung angeordnet. Somit können vorteilhaft die Ruhestellung und die Tragestellung besonders stabil definiert sein.

Gemäß einer Weiterbildung der Erfindung ist vorgesehen, dass das Zentralteil in Richtung der Gelenkachsen gesehen eine Oberseite und eine Unterseite aufweist. Dabei ist die Oberseite in bestimmungsgemäßer Tragepositionen des Zentralteils an einer Brille - wie oben ausgeführt - geodätisch oben angeordnet, und die Unterseite ist geodätisch unten angeordnet. Zumindest in einem Anlenkbereich, ausgewählt aus dem ersten Anlenkbereich und dem zweiten Anlenkbereich, weist das Zentralteil auf mindestens einer Seite, ausgewählt aus der Oberseite und der Unterseite, ein Schraubverbindungselement zur Herstellung der gelenkigen Verbindung mit dem jeweils zugeordneten Brillenelement, das heißt dem Brillenbügel oder dem Rahmen, auf. Das Schraubverbindungselement ermöglicht eine einfache und kostengünstige gelenkige Verbindung zwischen dem Brillenelement und dem Zentralteil, die zugleich stabil ist. An den Positionen, an denen kein Schraubverbindungselement vorgesehen ist, kann die gelenkige Verbindung stattdessen in Form eines Achsstummels oder Vorsprungs, der in eine geeignete Ausnehmung eingreift, vorgesehen sein, wobei der Achsstummel oder Vorsprung an dem Zentralteil und die Ausnehmung an dem Brillenelement, oder umgekehrt der Achsstummel oder Vorsprung an dem Brillenelement und die Ausnehmungen an dem Zentralteil vorgesehen sein kann.

Bevorzugt weist das Zentralteil in dem mindestens einen Anlenkbereich sowohl auf der Oberseite als auch auf der Unterseite jeweils ein Schraubverbindungselement auf.

Bevorzugt weist das Zentralteil sowohl in dem ersten Anlenkbereich als auch in dem zweiten Anlenkbereich jeweils auf mindestens einer Seite, ausgewählt aus der Oberseite und der Unterseite, ein Schraubverbindungselement auf.

Bevorzugt wird insbesondere eine Ausgestaltung, bei der in beiden Anlenkbereichen, also dem ersten Anlenkbereich und dem zweiten Anlenkbereich, auf jeweils beiden Seiten, also auf der Oberseite und auf der Unterseite, jeweils ein Schraubverbindungselement zur Herstellung der gelenkigen Verbindung mit dem jeweils zugeordneten Brillenelement vorgesehen ist. In dem ersten Anlenkbereich ist also sowohl auf der Oberseite als auch auf der Unterseite jeweils ein Schraubverbindungselement zur Herstellung der gelenkigen Verbindung mit dem Rahmen vorgesehen; in dem zweiten Anlenkbereich ist sowohl auf der Oberseite als auch auf der Unterseite jeweils ein Schraubverbindungselement zur Herstellung der gelenkigen Verbindung mit dem Brillenbügel vorgesehen. Dies ermöglicht eine besonders stabile gelenkige Verbindung des Zentralteils mit den Brillenelementen, die zugleich auch einfach zu trennen ist.

Gemäß einer Weiterbildung der Erfindung ist vorgesehen, dass das Schraubverbindungselement als Gewinde ausgebildet ist. In das Gewinde kann insbesondere eine geeignete Schraube eingreifen, um das Zentralteil gelenkig mit dem zugeordneten Brillenelement zu verbinden. Das zugeordnete Brillenelement kann in bevorzugter Ausgestaltung eine Durchgangsbohrung aufweisen, durch die die Schraube hindurchgreift, um dann mit dem Gewinde des Zentralteils zu kämmen und so die gelenkige Verbindung zwischen dem Brillenelement und dem Zentralteil zu schaffen.

Gemäß einer weiteren bevorzugten Ausgestaltung, insbesondere zur Darstellung eines besonders schmalen Brillenscharnier, kann das Schraubverbindungselement auch als durchgehendes Gewinde oder als Durchgangsbohrung ausgebildet sein, wobei sich das durchgehende Gewinde oder die Durchgangsbohrung von der Oberseite bis zu der Unterseite in dem zugeordneten Anlenkbereich erstreckt. In die Durchgangsbohrung oder das durchgehende Gewinde wird dann bevorzugt von einer Seite, ausgewählt aus der Oberseite und der Unterseite, ein Gegenverbindungselement wie beispielsweise eine Schraube oder ein Bolzen eingeführt, wodurch das Zentralteil an das zugeordnete Brillenelement angelenkt wird. Die Schraube kann dann insbesondere mit einem Gewinde zusammenwirken, welches in dem Brillenelement vorgesehen ist, wenn das Zentralteil als Schraubverbindungselement eine Durchgangsbohrung aufweist.

Gemäß einer Weiterbildung der Erfindung ist vorgesehen, dass das Zentralteil aus einem Metall gebildet ist. Die stellt eine ebenso stabile wie werthaltige, zugleich jedoch auch einfach und kostengünstig herzustellende Ausgestaltung des Zentralteils dar. Bevorzugt besteht das Zentralteil aus einem Metall. Der Begriff "Metall" schließt dabei insbesondere auch eine Metalllegierung ein.

In bevorzugter Ausgestaltung ist das Zentralteil aus Metall in einem Metallpulver-Spritzgussverfahren gebildet. Alternativ ist es möglich, dass das Zentralteil aus einem Metall in einem Sinterverfahren gebildet ist. Alternativ ist es möglich, dass das Zentralteil aus einem Metall in einem generativen Fertigungsverfahren, insbesondere einem additiven Fertigungsverfahren, vorzugsweise einem pulverbettbasierten Fertigungsverfahren wie insbesondere dem selektivem Laserschmelzen oder selektiven Lasersintern, gebildet ist. Das Zentralteil kann auf diese Weise sehr einfach und vorzugsweise ohne mechanische Nacharbeit mit hoher Präzision und Freiheit in der konkreten Formgestaltung hergestellt sein.

Gemäß einer alternativen bevorzugten Ausgestaltung ist das Zentralteil aus einem Kunststoff gebildet. Vorzugsweise besteht es aus einem Kunststoff. Das Zentralteil kann auf diese Weise insbesondere sehr leicht und kostengünstig ausgebildet sein. Bei dem Kunststoff kann es sich insbesondere um einen faserverstärkten Kunststoff handeln. Das Zentralteil ist bevorzugt mittels Spritzguss oder generativer Fertigung, insbesondere additiver Fertigung, gefertigt.

Gemäß einer Weiterbildung der Erfindung ist vorgesehen, dass die Kabelführungsausnehmung in Richtung der Gelenkachsen auf einer ersten Seite offen und auf einer gegenüberliegenden zweiten Seite geschlossen ausgebildet ist. Auf der zweiten Seite, auf der die Kabelführungsausnehmung geschlossen ausgebildet ist, weist das Zentralteil einen Bodenbereich für die Kabelführungsausnehmung auf. Das Kabel ist bei dieser Ausgestaltung nicht nur einfach in die Kabelführungsausnehmung einführbar, sondern wird auch durch den Bodenbereich vorteilhaft gestützt und geführt. Zugleich ist eine Demontage des Zentralteils einfach möglich, insbesondere ohne das Kabel von dem Brillenbügel oder Rahmen, und/oder von einer elektrischen oder elektronischen Komponente trennen zu müssen, mit der das Kabel verbunden ist.

In besonders bevorzugter Ausgestaltung ist die Kabelführungsausnehmung auf der Oberseite offen und auf der Unterseite geschlossen ausgebildet, wobei der Bodenbereich an der Unterseite des Zentralteils angeordnet ist. Das Kabel wird so vorteilhaft in bestimmungsgemäßer Anordnung des Zentralteils an einer Brille, die ein Brillenträger trägt, durch die Schwerkraft in der Kabelführungsausnehmung und damit in dem Zentralteil gehalten.

In einer Ausführungsform des Zentralteils ist vorgesehen, dass das Zentralteil derart ausgebildet und insbesondere auf eine Brille, für welche das Zentralteil verwendet wird, derart abgestimmt ist, dass die Kabelführungsausnehmung im Bereich einer gedachten neutralen Faser oder Nulllinie der Brille angeordnet ist. Insbesondere kann auf diese Weise ein in der Kabelführungsausnehmung angeordnetes Kabel im Bereich der oder bevorzugt entlang der gedachten neutralen Faser oder Nulllinie verlaufen, sodass eine Wegstrecke, über die das Kabel verlegt ist, zwischen der Ruhestellung und der Tragestellung der Brille zumindest weitgehend unverändert, vorzugsweise unverändert bleibt. Es kann so vorteilhaft insbesondere eine Dehnung und/oder Stauchung des Kabels zumindest weitgehend vermieden und dadurch verhindert werden, dass das Kabel mechanisch belastet oder im schlimmsten Fall eingeklemmt wird. Insbesondere ist das Zentralteil bevorzugt entsprechend auf einen Brillenbügel und einen Rahmen der Brille abgestimmt. Insbesondere ist die Anordnung der Kabelführungsausnehmung an dem Zentralteil entsprechend abgestimmt.

Unter einer gedachten neutralen Faser oder Nulllinie wird im Kontext der vorliegenden technischen Lehre insbesondere eine gedachte Linie verstanden, die durch den Rahmen und den Brillenbügel der Brille verläuft, und deren Länge sich beim Verschwenken des Brillenbügels zwischen der Ruhestellung und der Tragestellung nicht verändert. In Abweichung von der Verwendung der Begriffe "neutrale Faser" oder "Nulllinie" in der Festigkeitslehre ist es im Kontext der vorliegenden technischen Lehre möglich und sogar bevorzugt vorgesehen, dass die gedachte neutrale Faser oder Nulllinie nicht durch Material des Brillenbügels und des Rahmens verläuft, sondern durch in dem Brillenbügel einerseits und in dem Rahmen andererseits angeordnete Ausnehmungen, insbesondere solche Ausnehmungen, die vorgesehen sind, um mindestens ein Kabel aufzunehmen.

Die Aufgabe wird auch gelöst, indem eine Brille geschaffen wird, die einen Rahmen und einen Brillenbügel aufweist. Der Rahmen ist dabei insbesondere ein Element, welches wenigstens ein Brillenglas, insbesondere zwei Brillengläser, einfasst und an der Brille hält. Insbesondere ist der Rahmen ein Mittelteil der Brille. Der Brillenbügel ist mit dem Rahmen über ein erfindungsgemäßes Zentralteil oder ein Zentralteil nach einem der zuvor beschriebenen Ausführungsbeispiele zwischen der bereits zuvor definierten Ruhestellung und der ebenfalls bereits zuvor definierten Tragestellung schwenkbeweglich verbunden. In Zusammenhang mit der Brille verwirklichen sich insbesondere die Vorteile, die bereits in Zusammenhang mit dem Zentralteil erläutert wurden.

Vorzugsweise weist die Brille zwei Brillenbügel und zwei Zentralteile auf, wobei ein erster Brillenbügel, beispielsweise ein linker Brillenbügel, über ein erstes Zentralteil mit dem Rahmen verbunden ist, wobei ein zweiter Brillenbügel, beispielsweise ein rechter Brillenbügel, über ein zweites Zentralteil mit dem Rahmen verbunden ist.

Die Brille ist in bevorzugter Ausgestaltung als Datenbrille ausgebildet, insbesondere als Brille für augmentierte Realität, oder als Brille für virtuelle Realität. Es ist bevorzugt auch möglich, dass die Brille als Sensorbrille ausgebildet ist, mit wenigstens einem Sensor, insbesondere zur Überwachung eines physischen Zustands des Brillenträgers. Weiterhin ist es bevorzugt möglich, dass die Brille als Audiobrille ausgebildet ist, insbesondere als Audio-Headset oder mit einem Audio-Headset.

Gemäß einer Weiterbildung der Erfindung ist vorgesehen, dass der Rahmen mit dem Zentralteil in dessen erstem Anlenkbereich gelenkig verbunden ist, wobei der Brillenbügel mit dem Zentralteil in dessen zweitem Anlenkbereich gelenkig verbunden ist. Der Rahmen, das Zentralteil und der Brillenbügel bilden dabei gemeinsam ein Brillenscharnier der Brille.

Dieses Brillenscharnier weist vorzugsweise eine gedachte Scharnierachse auf, um die der Brillenbügel bei seiner Bewegung von der Ruhestellung in die Tragestellung - und umgekehrt - schwenkt.

Die Schwenkbewegung zerfällt tatsächlich in zwei Teil-Schwenkbewegungen, nämlich eine erste Teil-Schwenkbewegung des Zentralteils um die erste Gelenkachse relativ zu dem Rahmen, und eine zweite Teil-Schwenkbewegung des Brillenbügels um die zweite Gelenkachse relativ zu dem Zentralteil. Das so gebildete Brillenscharnier weist insbesondere jedenfalls keine materielle oder in Form einer Welle oder dergleichen materialisierte Scharnierachse auf.

Gemäß einer Weiterbildung der Erfindung ist vorgesehen, dass zumindest ein Brillenelement, ausgewählt aus dem Brillenbügel und dem Rahmen, ein elastisch vorgespanntes Gegenrastelement aufweist, das eingerichtet ist, um mit dem ersten Rastelement des Zentralteils, das dem Brillenelement zugeordnet ist, zusammenzuwirken, um die Ruhestellung zu definieren, und um mit dem zweiten Rastelement des Zentralteils, das dem Brillenelement zugeordnet ist, zusammenzuwirken, um die Tragestellung zu definieren. Aufgrund der elastischen Vorspannung kann mit dem Gegenrastelement in vorteilhafter Weise der oben bereits beschriebene Schnappeffekt in die jeweilige Funktionsstellung, das heißt die Tragestellung und/oder die Ruhestellung, erreicht werden.

In einer bevorzugten Ausgestaltung weisen beide Brillenelemente, sowohl der Brillenbügel als auch der Rahmen, jeweils ein solches elastisch vorgespanntes Gegenrastelement auf. Dies ermöglicht eine besonders ausgeprägte und stabile Ausgestaltung des Schnappeffekts und zugleich eine stabile, akkurate und ausgeprägte Definition der Funktionsstellung.

Gemäß einer Weiterbildung der Erfindung ist vorgesehen, dass das Gegenrastelement als in einer Aufnahmebohrung des jeweiligen Brillenelements geführter, federbelasteter Kolben ausgebildet ist. Das erste Rastelement und das zweite Rastelement sind dabei jeweils als Rastausnehmungen ausgebildet, in welche der federbelastete Kolben in der jeweils zugeordneten Funktionsstellung, das heißt der Ruhestellung und der Tragestellung, unter Vorspannung gedrängt ist. Dies stellt eine ebenso einfache, kostengünstig zu fertigende und stabile Ausgestaltung des Gegenrastelements dar.

Bevorzugt ist dem Gegenrastelement als Vorspannelement eine Schraubenfeder zugeordnet, die vorzugsweise in der Aufnahmebohrung angeordnet ist.

Gemäß einer Weiterbildung der Erfindung ist vorgesehen, dass in der Kabelführungsausnehmung des Zentralteils ein Kabel, insbesondere ein elektrisches Kabel oder ein optisches Kabel, von dem Brillenbügel zu dem Rahmen geführt ist. Dabei verwirklichen sich in besonderer Weise die bereits erwähnten Vorteile.

Gemäß einer Weiterbildung der Erfindung ist vorgesehen, dass das Kabel als Flachbandkabel oder als FPC-Verbinder (Flexible Printed Circuit) ausgebildet ist. Insbesondere bei einem Flachbandkabel oder FPC-Verbinder verwirklichen sich in vorteilhafter Weise die bereits genannten Vorteile.

In einer Ausführungsform der Brille ist vorgesehen, dass zumindest ein Element, ausgewählt aus dem Rahmen und dem Brillenbügel, eine Wärmeabfuhraussparung aufweist, durch welche eine strömungstechnische Verbindung von einer äußeren Umgebung zu der Außenseite, insbesondere der Außenwandung, des Zentralteils hergestellt ist, und/oder durch welche die Außenseite, insbesondere die Außenwandung, des Zentralteils in der Tragestellung zugänglich, das heißt gegenüber einer äußeren Umgebung exponiert ist. Auf diese Weise kann effizient Wärme von dem Zentralteil abgeführt werden, sodass dieses vorteilhaft zur Kühlung eines elektronischen Funktionselements der Brille beitragen kann.

Vorzugsweise weist dabei das Zentralteil an der Außenseite und/oder an der Innenseite die mindestens eine Kühlstruktur auf.

In einer Ausführungsform der Brille ist die Wärmeabfuhraussparung nur an dem Brillenbügel vorgesehen. In einer anderen Ausführungsform der Brille ist die Wärmeabfuhraussparung nur an dem Rahmen vorgesehen.

In einer anderen Ausführungsform der Brille ist die Wärmeabfuhraussparung zumindest in der Tragestellung durch eine erste Teil-Aussparung, die an dem Brillenbügel ausgebildet ist, und eine zweite Teil-Aussparung, die an dem Rahmen ausgebildet ist, gebildet, wobei die Wärmeabfuhraussparung in der Tragestellung dadurch gebildet ist, dass die beiden Teil-Aussparungen durch Verschwenken des Brillenbügels relativ zu dem Rahmen in die Tragestellung zu der Wärmeabfuhraussparung kombiniert werden.

In wieder einer anderen Ausführungsform weist der Brillenbügel eine erste Wärmeabfuhraussparung auf, die eine erste strömungstechnische Verbindung zu der Außenseite des Zentralteils herstellt, wobei zugleich der Rahmen eine zweite Wärmeabfuhraussparung aufweist, die eine zweite strömungstechnische Verbindung zu der Außenseite des Zentralteils herstellt. Insgesamt wird auf diese Weise ein Strömungspfad gebildet, durch den Luft von der äußeren Umgebung über die erste strömungstechnische Verbindung zu der Außenseite des Zentralteils strömen und über die zweite strömungstechnische Verbindung wieder in die äußere Umgebung austreten kann. Auf diese Weise kann eine Kühlluft-Strömung über die Außenseite des Zentralteils verwirklicht werden. Selbstverständlich kann die Luftströmung auch den umgekehrten Weg nehmen, das heißt über die zweite strömungstechnische Verbindung zu der Außenseite des Zentralteils hin einströmen und über die erste strömungstechnische Verbindung wieder in die äußere Umgebung austreten. Die Außenseite des Zentralteils selbst kann bei dieser Ausführungsform in der Tragestellung für einen Betrachter optisch verborgen sein.

In einer Ausführungsform der Brille ist vorgesehen, dass die Kabelführungsausnehmung des Zentralteils im Bereich der gedachten neutralen Faser oder Nulllinie der Brille, insbesondere des Brillenbügels und des Rahmens, angeordnet ist.

Die Erfindung wird im Folgenden anhand der Zeichnung näher erläutert. Dabei zeigen:
- Figur 1: eine Darstellung eines ersten Ausführungsbeispiels eines Zentralteils für ein Brillenscharnier mit einem Kabel;
- Figur 2: eine Explosionsdarstellung eines Details eines ersten Ausführungsbeispiels einer Brille mit dem Zentralteil gemäß Figur 1;
- Figur 3: eine Darstellung des Details der Brille gemäß Figur 2 in zwei verschiedenen Funktionsstellungen;
- Figur 4: eine Explosionsdarstellung eines Details eines zweiten Ausführungsbeispiels einer Brille mit einem zweiten Ausführungsbeispiel eines Zentralteils;
- Figur 5: eine Darstellung eines dritten Ausführungsbeispiels eines Zentralteils;
- Figur 6: eine Darstellung eines Details eines dritten Ausführungsbeispiels einer Brille mit dem Zentralteil gemäß Figur 5, und
- Figur 7: eine Darstellung eines Details eines vierten Ausführungsbeispiels einer Brille mit dem Zentralteil gemäß Figur 5.

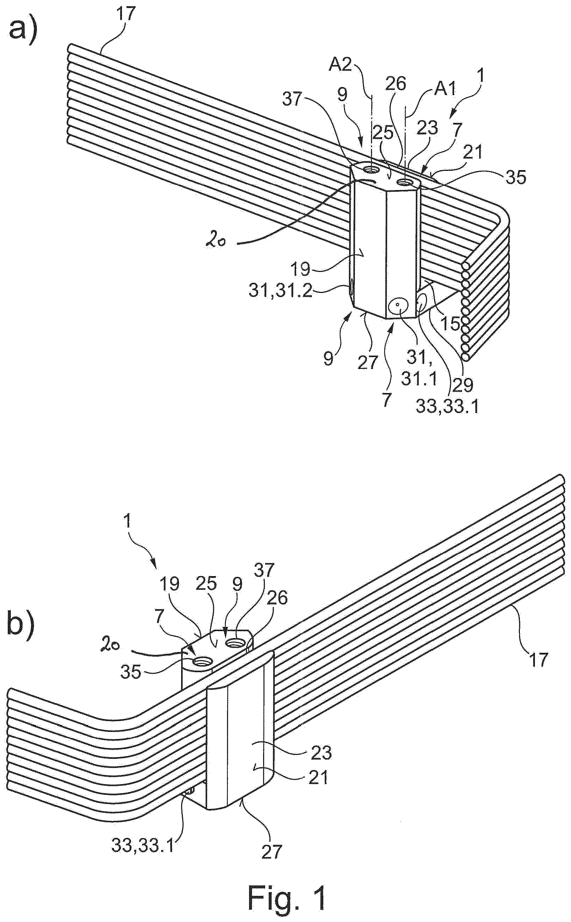

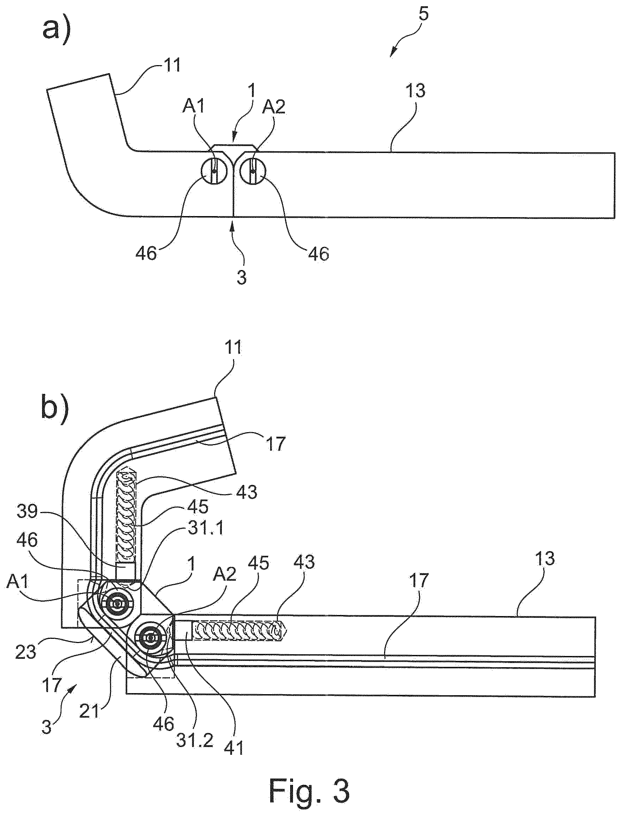

**Fig. 1** zeigt ein erstes Ausführungsbeispiel eines Zentralteils 1 für ein insbesondere in Figur 3 dargestelltes Brillenscharnier 3 einer ebenfalls zumindest teilweise in Figur 3 dargestellten Brille 5, wobei das Zentralteil 1 einen ersten Anlenkbereich 7 und einen zweiten Anlenkbereich 9 aufweist. Der erste Anlenkbereich 7 ist eingerichtet, um das Zentralteil 1 um eine erste Gelenkachse A1 gelenkig mit einem wiederum insbesondere in Figur 3 teilweise dargestellten Rahmen 11 der Brille 5 zu verbinden, und wobei der zweite Anlenkbereich 9 eingerichtet ist, um das Zentralteil 1 um eine zweite Gelenkachse A2 gelenkig mit einem ebenfalls in Figur 3 teilweise dargestellten Brillenbügel 13 der Brille 5 zu verbinden. Das Zentralteil 1 weist eine Kabelführungsausnehmung 15 auf, die eingerichtet ist zur Durchführung eines Kabels 17 von dem Brillenbügel 13 zu dem Rahmen 11 durch das Zentralteil 1 hindurch. Die Kabelführungsausnehmung 15 ist in Richtung der Gelenkachsen A1, A2 zumindest einseitig offen ausgebildet. Dadurch kann das Zentralteil 1 insbesondere sehr leicht an dem Kabel 17 angeordnet werden, insbesondere indem das Kabel 17 von der offenen Seite her in die Kabelführungsausnehmung 15 eingelegt wird, oder indem das Zentralteil 1 mit der Kabelführungsausnehmung 15 von der offenen Seite her auf das Kabel 17 aufgeschoben wird. Ebenso leicht kann das Zentralteil 1 wieder von der Brille 5 und insbesondere von dem Kabel 17 demontiert werden, insbesondere ohne dass dafür das Kabel 17 von dem Rahmen 11, dem Brillenbügel 13 oder einer elektrischen oder elektronischen Komponente, mit der das Kabel 17 verbunden ist, getrennt werden muss.

Vorzugsweise ist das Zentralteil 1 einteilig ausgebildet.

Zugleich schützt das Zentralteil 1 das Kabel 17 insbesondere vor mechanischen Einwirkungen, insbesondere in einer Ruhestellung des Brillenbügels 13, insbesondere vor Auswirkungen von außerhalb der Brille 5. Das Brillenscharnier 3, welches durch den Brillenbügel 13, den Rahmen 11 und das Zentralteil 1 gebildet wird, kann einfach aufgebaut, gleichwohl stabil, leicht zu montieren und zu demontieren sein, und dabei das Kabel 17 optimal schützen.

Das Zentralteil 1 weist eine in an der Brille 5 montiertem Zustand dem Gesicht eines Brillenträgers zugewandte Innenseite 19 auf, die auch in Figur 1a) dem Betrachter zugewandt ist. Es weist außerdem eine in dem an der Brille 5 montierten Zustand dem Gesicht des Brillenträgers abgewandte Außenseite 21 auf, die in Figur 1a) dem Betrachter abgewandt, jedoch in Figur 1b) dem Betrachter zugewandt ist.

In Figur 1 ist somit das Zentralteil 1 insbesondere bei a) von einer ersten Seite zu sehen, nämlich mit Blick auf die Innenseite 19, und bei b) von der anderen Seite, nämlich mit Blick auf die Außenseite 21. In den beiden Darstellung gemäß Figur 1 ist erkennbar, dass die Kabelführungsausnehmung 15 zu der Außenseite 21 hin geschlossen ist. Insbesondere weist sie an der Außenseite 21 eine Außenwandung 23 auf, durch die das Kabel 17 nach außen hin geschützt ist.

Die Kabelführungsausnehmung 15 ist bevorzugt außerdem zu der Innenseite 19 hin geschlossen. Insbesondere weist das Zentralteil 1 bevorzugt eine Innenwandung 20 auf, welche die Kabelführungsausnehmung 15 nach innen begrenzt.

Nach oben, zu einer Oberseite 25 hin, ist die Kabelführungsausnehmung 15 offen, wobei im Bereich der Oberseite 25 insbesondere ein Schlitz 26 ausgebildet ist, durch den das Kabel 17 in die Kabelführungsausnehmung 15 eingeführt werden kann.

Auf einer in Richtung der Gelenkachsen A1, A2 der Oberseite 25 gegenüberliegenden Unterseite 27 ist die Kabelführungsausnehmung 15 geschlossen, wobei das Zentralteil 1 hier insbesondere einen Bodenbereich 29 für die Kabelführungsausnehmung 15 aufweist. Insbesondere kann sich das Kabel 17 an dem Bodenbereich 29 abstützen.

Das Zentralteil 1 weist in dem ersten Anlenkbereich 7 ein erstes erstes Rastelement 31.1 von zwei ersten Rastelementen 31 zur Definition der Ruhestellung des Brillenbügels 13 auf, sowie außerdem ein erstes zweites Rastelement 33.1 von zwei zweiten Rastelementen 33 zur Definition einer Tragestellung des Brillenbügels 13. In dem zweiten Anlenkbereich 9 weist das Zentralteil 1 ein zweites erstes Rastelement 31.2 der zwei ersten Rastelemente 31 auf, sowie ein dem Betrachter aufgrund der Perspektive der verschiedenen Darstellungen verborgenes zweites zweites Rastelement der zwei zweiten Rastelemente 33.

Die Rastelemente 31, 33 sind hier sämtlich als Rastausnehmungen ausgebildet.

Auf der Oberseite 25 weist das Zentralteil 1 in dem ersten Anlenkbereich 7 ein erstes erstes Schraubverbindungselement 35 auf. In dem ersten Anlenkbereich 7 ist außerdem auch auf der Unterseite 27 ein zweites erstes Schraubverbindungselement vorgesehen, das hier allerdings aufgrund der Perspektive dem Blick des Betrachters verborgen ist. Das Zentralteil 1 weist außerdem in dem zweiten Anlenkbereich 9 auf der Oberseite 25 ein erstes zweites Schraubverbindungselement 37 auf, sowie außerdem in dem zweiten Anlenkbereich 9 auf der Unterseite 27 ein ebenfalls dem Blick des Betrachters verborgenes zweites zweites Schraubverbindungselement. Die Schraubverbindungselemente 35, 37 dienen jeweils der Herstellung der gelenkigen Verbindung mit dem jeweils zugeordneten Brillenelement, ausgewählt aus dem Brillenbügel 13 und dem Rahmen 11. Die Schraubverbindungselemente 35, 37 sind bei dem hier dargestellten ersten Ausführungsbeispiel sämtlich als Gewinde ausgebildet.

Das Zentralteil 1 ist bevorzugt aus Metall gebildet, was eine Ausbildung aus einer Metalllegierung einschließt; insbesondere besteht das Zentralteil 1 bevorzugt aus einem Metall, was wiederum eine Metalllegierung einschließt. Bevorzugt ist das Zentralteil 1 in einem Metallpulver-Spritzgussverfahren, einem Sinterverfahren, oder einem generativen Fertigungsverfahren gebildet. Alternativ ist das Zentralteil 1 aus einem Kunststoff gebildet. Vorzugsweise besteht es aus einem Kunststoff. Bei dem Kunststoff kann es sich insbesondere um einen faserverstärkten Kunststoff handeln. Das Zentralteil 1 ist bevorzugt mittels Spritzguss oder generativer Fertigung, insbesondere additiver Fertigung, aus dem Kunststoff gefertigt.

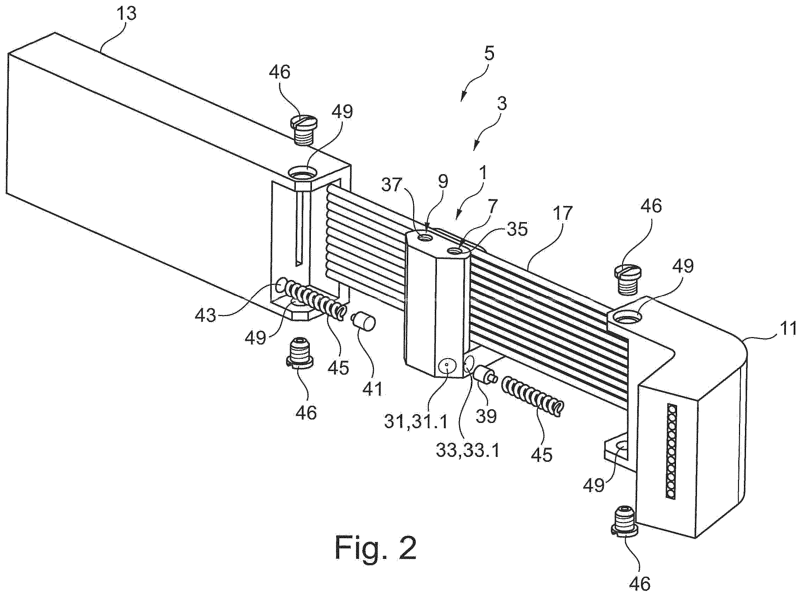

Fig. 2 zeigt eine Explosionsdarstellung eines Details der Brille 5 mit dem Rahmen 11, dem Brillenbügel 13 und dem Zentralteil 1.

Gleiche und funktionsgleiche Elemente sind in allen Figuren mit gleichen Bezugszeichen versehen, sodass insofern jeweils auf die vorangegangene Beschreibung verwiesen wird.

In montiertem Zustand ist der Brillenbügel 13 mit dem Rahmen 11 über das Zentralteil 1 zwischen seiner Ruhestellung und seiner Tragestellung schwenkbeweglich verbunden.

Insbesondere ist der Rahmen 11 mit dem Zentralteil 1 in dessen erstem Anlenkbereich 7 gelenkig verbunden, wobei der Brillenbügel 13 mit dem Zentralteil 1 in dessen zweitem Anlenkbereich 9 gelenkig verbunden ist. Dabei bilden der Rahmen 11, das Zentralteil 1 und der Brillenbügel 13 gemeinsam das Brillenscharnier 3.

Der Rahmen 11 weist ein erstes, elastisch vorgespanntes Gegenrastelement 39 auf, das eingerichtet ist, um mit dem ersten ersten Rastelement 31.1 des Zentralteils 1 zusammenzuwirken, um die Ruhestellung des Brillenbügels 13 zu definieren. Es ist weiter eingerichtet, um mit dem ersten zweiten Rastelement 33.1 zusammenzuwirken, um die Tragestellung des Brillenbügels 13 zu definieren.

Der Brillenbügel 13 weist ein zweites elastisch vorgespanntes Gegenrastelement 41 auf, das in entsprechender Weise eingerichtet ist, um einerseits zur Definition der Ruhestellung des Brillenbügels 13 mit dem zweiten ersten Rastelement 31.2 des Zentralteils 1 zusammenzuwirken, und um zur Definition der Tragestellung des Brillenbügels 13 mit dem zweiten zweiten Rastelement zusammenzuwirken.

Die Gegenrastelemente 39, 41 sind als in einer Aufnahmebohrung des jeweils zugeordneten Brillenelements geführte, federbelastete Kolben ausgebildet, wobei hier nur die in dem Brillenbügel 13 vorgesehene Aufnahmebohrung 43 erkennbar ist. Eine entsprechende Aufnahmebohrung ist aber auch in dem Rahmen 11 ausgebildet. Die federbelasteten Kolben sind in den jeweils zugeordneten Funktionsstellungen, das heißt der Ruhestellung einerseits und der Tragestellung andererseits, unter Vorspannung in die jeweiligen als Rastausnehmungen ausgebildeten Rastelemente 31, 33 gedrängt. Den Gegenrastelementen 39, 41 ist als Vorspannelement 45 hier jeweils eine Schraubenfeder zugeordnet. Diese Vorspannelemente 45 sind auch in den jeweils zugeordneten Aufnahmebohrung 43 angeordnet und beaufschlagen die als Kolben ausgebildeten Gegenrastelemente 39, 41 jeweils in die jeweiligen Funktionsstellungen.

Die gelenkigen Verbindungen zwischen dem Zentralteil 1 und dem Rahmen 11 einerseits sowie dem Brillenbügel 13 andererseits werden hier durch Schrauben 46 bewirkt, die jeweils durch Durchgangsbohrungen 49 der Brillenelemente hindurchgreifen und mit den als Gewinde ausgebildeten Schraubverbindungselementen 35, 37 zusammenwirken, um die jeweiligen gelenkigen Verbindungen herzustellen.

Das Kabel 17 ist insbesondere als elektrisches Kabel oder als optisches Kabel ausgebildet, insbesondere als Flachbandkabel oder FPC-Verbinder.

Die Brille 5 ist vorzugsweise eine Datenbrille, insbesondere eine Brille für augmentierte Realität, oder eine Brille für virtuelle Realität. Es ist bevorzugt auch möglich, dass die Brille 5 als Sensorbrille ausgebildet ist, mit wenigstens einem Sensor, insbesondere zur Überwachung eines physischen Zustands des Brillenträgers. Weiterhin ist es bevorzugt möglich, dass die Brille 5 als Audiobrille ausgebildet ist, insbesondere als Audio-Headset oder mit einem Audio-Headset.

Fig. 3 zeigt bei a) eine Detaildarstellung der Brille 5 in der Tragestellung des Brillenbügels 13. Der Brillenbügel 13 schwenkt relativ zu dem Rahmen 11 von der Tragestellung in die bei b) dargestellte Ruhestellung. Dabei zerfällt diese Schwenkbewegung bei dem hier vorgeschlagenen Brillenscharnier 3 in zwei Teil-Schwenkbewegungen einerseits um die erste Gelenkachse A1 und andererseits um die zweite Gelenkachse A2.

Bei b) ist der Brillenbügel 13 in seiner eingeklappten Ruhestellung dargestellt. Dabei wird zum einen deutlich, dass das Kabel 17 aufgrund der zwei Teil-Schwenkbewegungen und der damit verbundenen, kleineren Teil-Schwenkwinkel im Bereich der Gelenkachsen A1, A2 weniger stark gebogen wird, als wenn die Schwenkbewegung unmittelbar um eine materielle Scharnierachse, beispielsweise eine Gelenkwelle oder dergleichen, erfolgen würde, wobei das Kabel 17 hier insbesondere um zweimal ungefähr 45° statt einmalig um 90° umgelenkt wird. Zum anderen wird deutlich, dass das Kabel 17 nach außen, zu der Außenseite 21 hin, durch die Außenwandung 23 des Zentralteils 1 vor Einwirkungen von außerhalb der Brille 5 geschützt ist.

Die Kabelführungsausnehmung 15 des Zentralteils 1 ist bevorzugt im Bereich einer gedachten neutralen Faser oder Nulllinie der Brille 5, insbesondere des Brillenbügels 13 und des Rahmens 11, angeordnet. Insbesondere verläuft das Kabel 17 bevorzugt entlang der gedachten neutralen Faser oder Nulllinie. Eine Dehnung und/oder Stauchung des Kabels 17 ist dann beim Verschwenken des Brillenbügels 13 relativ zu dem Rahmen 11 von der Tragestellung in die Ruhestellung und zurück bevorzugt minimal.

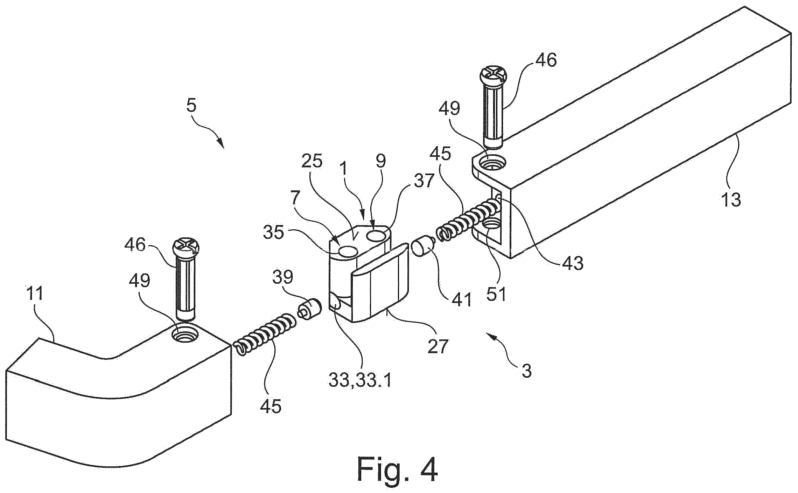

**Fig. 4** zeigt eine Explosionsdarstellung eines Details eines zweiten Ausführungsbeispiels der Brille 5 mit einem zweiten Ausführungsbeispiel des Zentralteils 1. Dabei ist der übersichtlicheren Darstellung wegen das Kabel 17 weggelassen. Bei diesem zweiten Ausführungsbeispiel sind der Rahmen 11 und auch der Brillenbügel 13 schmaler ausgebildet, wobei auch das Zentralteil 1 schmaler ausfällt. Die Schraubverbindungselemente 35 und 37 sind hier als Durchgangsbohrungen ausgebildet, die sich ausgehend von der Oberseite 25 bis zu der Unterseite 27 des Zentralteils 1 erstrecken. Entsprechend sind im Vergleich zu dem ersten Ausführungsbeispiel gemäß Figur 2 nur zwei längere Schrauben 46 vorgesehen, von denen jede in montiertem Zustand eine zugeordnete Durchgangsbohrung des Zentralteils 1, ausgewählt aus dem ersten Schraubverbindungselement 35 und dem zweiten Schraubverbindungselement 37, vollständig durchsetzt, wobei die Schrauben 46 jeweils durch die Durchgangsbohrungen 49 in die zugeordneten Brillenelemente eingeführt sind. Die Brillenelemente weisen ihrerseits Gegenverbindungselemente 51 auf, wobei hier nur ein Gegenverbindungselement 51 des Brillenbügels 13 für den Betrachter sichtbar ist. Diese Gegenverbindungselemente 51 sind als Gewinde ausgebildet, mit denen die Schrauben 46 zusammenwirken, um das Zentralteil 1 gelenkig mit den Brillenelementen zu verbinden.

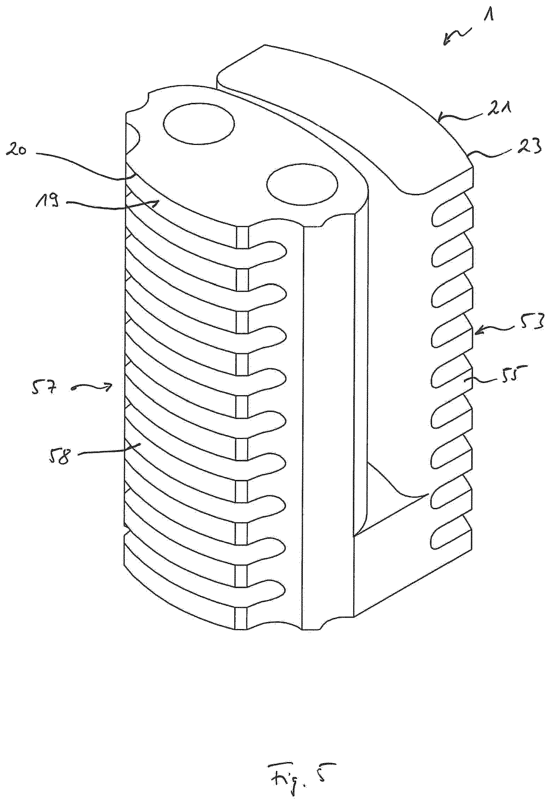

**Fig. 5** zeigt eine Darstellung eines dritten Ausführungsbeispiels eines Zentralteils 1. Das Zentralteil 1 weist an der Außenseite 21, insbesondere an der Außenwandung 23, mindestens eine erste Kühlstruktur 53, insbesondere mindestens eine erste Kühlrippe 55, vorzugsweise eine Mehrzahl von ersten Kühlrippen 55, auf. Der besseren Übersichtlichkeit wegen ist hier nur eine der ersten Kühlrippen 55 mit dem entsprechenden Bezugszeichen gekennzeichnet.

Bei dem hier dargestellten Ausführungsbeispiel weist das Zentralteil 1 zusätzlich an der Innenseite 19, insbesondere an der Innenwandung 20, mindestens eine zweite Kühlstruktur 57, insbesondere mindestens eine zweite Kühlrippe 58, vorzugsweise eine Mehrzahl von zweiten Kühlrippen 58, auf.

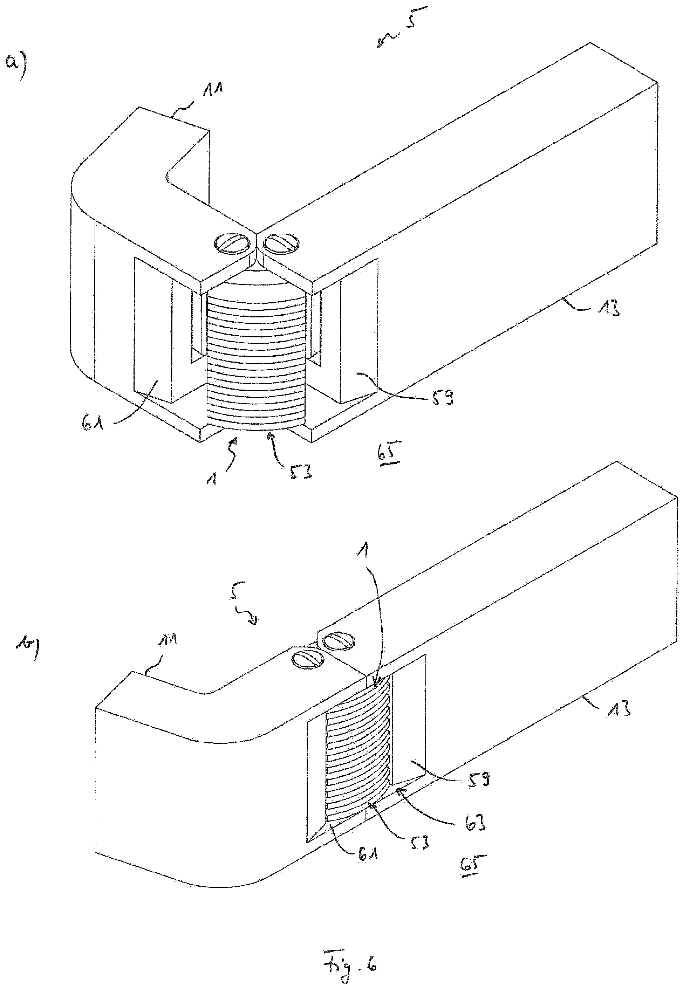

**Fig. 6** zeigt eine Darstellung eines Details eines dritten Ausführungsbeispiels einer Brille 5 mit dem Zentralteil 1 gemäß Figur 5. Bei diesem dritten Ausführungsbeispiel weist die Brille 5 an dem Brillenbügel 13 eine erste Teil-Aussparung 59 auf, wobei sie außerdem an dem Rahmen 11 eine zweite Teil-Aussparung 61 aufweist.

Bei a) ist dargestellt, dass die Teil-Aussparungen 59, 61 in der Ruhestellung voneinander weggeschwenkt sind, sodass die erste Kühlstruktur 53 frei zugänglich ist.

Bei b) ist dargestellt, dass die Teil-Aussparungen 59, 61 in der Tragestellung so gegeneinander geschwenkt sind, dass sie gemeinsam eine Wärmeabfuhraussparung 63 bilden, durch welche die erste Kühlstruktur 53 von einer äußeren Umgebung 65 der Brille 5 her zugänglich ist. Auf diese Weise kann Wärme von der ersten Kühlstruktur 53 durch die Wärmeabfuhraussparung 63 in die äußere Umgebung 65 abgeführt werden.

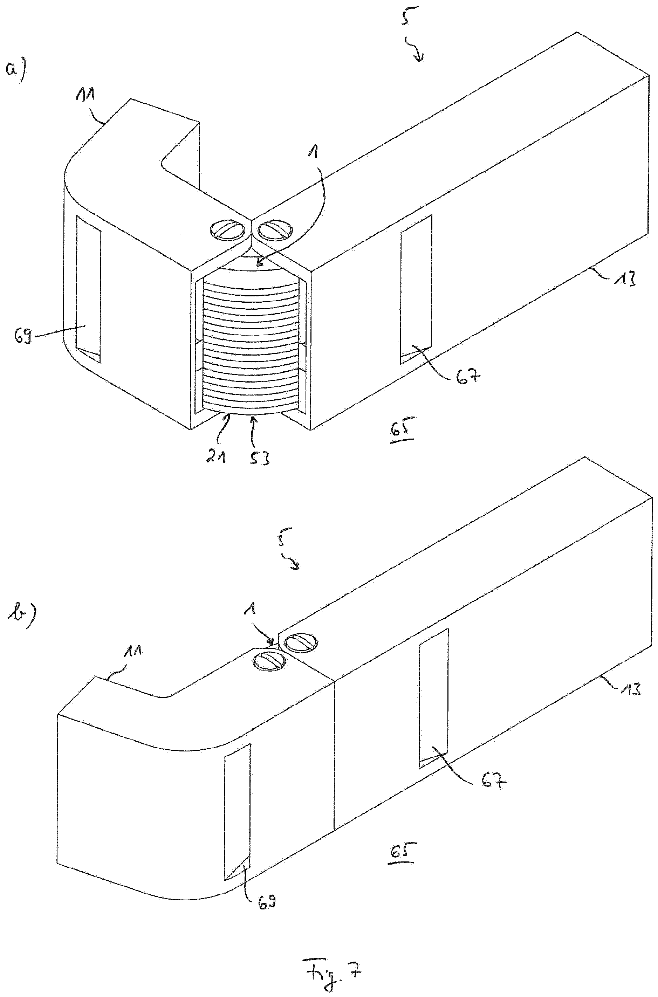

**Fig. 7** zeigt eine Darstellung eines Details eines vierten Ausführungsbeispiels einer Brille 5 mit dem Zentralteil 1 gemäß Figur 5, wobei die Brille bei a) in der Ruhestellung und bei b) in der Tragestellung dargestellt ist. Bei diesem vierten Ausführungsbeispiel der Brille 5 weist der Brillenbügel 13 eine erste Wärmeabfuhraussparung 67 auf, die eine erste strömungstechnische Verbindung zu der Außenseite 21 des Zentralteils 1 und damit zu der ersten Kühlstruktur 53 herstellt, wobei zugleich der Rahmen 11 eine zweite Wärmeabfuhraussparung 69 aufweist, die eine zweite strömungstechnische Verbindung zu der ersten Kühlstruktur 53 herstellt. Insgesamt wird auf diese Weise ein Strömungspfad gebildet, durch den Luft von der äußeren Umgebung 65 über die erste strömungstechnische Verbindung zu der ersten Kühlstruktur 53 strömen und über die zweite strömungstechnische Verbindung wieder in die äußere Umgebung 65 austreten kann. Auf diese Weise kann eine Kühlluft-Strömung über die erste Kühlstruktur 53 verwirklicht werden. Die Luftströmung kann natürlich auch den umgekehrten Weg nehmen, das heißt über die zweite strömungstechnische Verbindung zu der ersten Kühlstruktur 53 hin einströmen und über die erste strömungstechnische Verbindung wieder in die äußere Umgebung 65 austreten. Die Außenseite 21 und damit auch die erste Kühlstruktur 53 des Zentralteils 1 sind bei diesem Ausführungsbeispiel in der Tragestellung für einen Betrachter optisch verborgen.

## Patentansprüche

1. Zentralteil (1) für ein Brillenscharnier (3), mit
- einem ersten Anlenkbereich (7), der eingerichtet ist, um das Zentralteil (1) um eine erste Gelenkachse (A1) gelenkig mit einem Rahmen (11) einer Brille (5) zu verbinden,
- einem zweiten Anlenkbereich (9), der eingerichtet ist, um das Zentralteil (1) um eine zweite Gelenkachse (A2) gelenkig mit einem Brillenbügel (13) der Brille (1) zu verbinden, und mit
- einer das Zentralteil (1) senkrecht zu den Gelenkachsen (A1,A2) durchdringenden Kabelführungsausnehmung (15), die eingerichtet ist zur Durchführung eines Kabels (17) von dem Brillenbügel (13) zu dem Rahmen (11) durch das Zentralteil (1), und wobei
- die Kabelführungsausnehmung (15) in Richtung der Gelenkachsen (A1,A2) zumindest einseitig offen ist.

2. Zentralteil (1) nach Anspruch 1, wobei das Zentralteil (1) eine in an einer Brille (5) montiertem Zustand dem Gesicht eines Trägers der Brille (5) zugewandte Innenseite (19) und eine dem Gesicht des Trägers abgewandte Außenseite (21) aufweist, wobei die Kabelführungsausnehmung (15) zu der Außenseite (21) hin geschlossen ist.

3. Zentralteil (1) nach einem der vorhergehenden Ansprüche, wobei das Zentralteil (1) zumindest in einem Anlenkbereich (7,9), ausgewählt aus dem ersten Anlenkbereich (7) und dem zweiten Anlenkbereich (9), ein erstes Rastelement (31) zur Definition einer Ruhestellung des Brillenbügels (13) und ein zweites Rastelement (33) zur Definition einer Tragestellung des Brillenbügels (13) aufweist.

4. Zentralteil (1) nach Anspruch 3, wobei wenigstens ein Rastelement (31,33), ausgewählt aus dem ersten Rastelement (31) und dem zweiten Rastelement (33), als Rastausnehmung ausgebildet ist.

5. Zentralteil (1) nach einem der vorhergehenden Ansprüche, wobei das Zentralteil (1) in dem ersten Anlenkbereich (7) und in dem zweiten Anlenkbereich (9) jeweils ein erstes Rastelement (31) zur Definition der Ruhestellung des Brillenbügels (13) und ein zweites Rastelement (33) zur Definition der Tragestellung des Brillenbügels (13) aufweist.

6. Zentralteil (1) nach einem der vorhergehenden Ansprüche, wobei das Zentralteil (1) in Richtung der Gelenkachsen (A1,A2) gesehen eine Oberseite (25) und eine Unterseite (27) aufweist, wobei das Zentralteil (1) zumindest in einem Anlenkbereich (7,9), ausgewählt aus dem ersten Anlenkbereich (7) und dem zweiten Anlenkbereich (9), vorzugsweise jeweils in beiden Anlenkbereichen (7,9), zumindest auf einer Seite, ausgewählt aus der Oberseite (25) und der Unterseite (27), vorzugsweise jeweils auf der Oberseite (25) und auf der Unterseite (27) oder durchgehend von der Oberseite (25) bis zu der Unterseite (27), ein Schraubverbindungselement (35,37) zur Herstellung der gelenkigen Verbindung mit dem jeweils zugeordneten Brillenelement, ausgewählt aus dem Brillenbügel (13) und dem Rahmen (11), aufweist.

7. Zentralteil (1) nach Anspruch 6, wobei das Schraubverbindungselement (35,37) als Gewinde oder als Durchgangsbohrung ausgebildet ist.

8. Zentralteil (1) nach einem der vorhergehenden Ansprüche, wobei das Zentralteil (1) aus einem Metall oder einem Kunststoff gebildet ist, vorzugsweise in einem Metallpulver-Spritzgussverfahren oder Kunststoff-Spritzgussverfahren, einem Sinterverfahren, oder einem generativen Fertigungsverfahren.

9. Zentralteil (1) nach einem der vorhergehenden Ansprüche, wobei die Kabelführungsausnehmung (15) in Richtung der Gelenkachsen (A1,A2) auf einer ersten Seite offen und auf einer gegenüberliegenden zweiten Seite geschlossen ausgebildet ist, wobei das Zentralteil (1) auf der zweiten Seite einen Bodenbereich (29) für die Kabelführungsausnehmung (15) aufweist.

10. Brille (5), mit einem Rahmen (11) und einem Brillenbügel (13), wobei der Brillenbügel (13) mit dem Rahmen (11) über ein Zentralteil (1) nach einem der Ansprüche 1 bis 9 zwischen einer Ruhestellung und einer Tragestellung schwenkbeweglich verbunden ist.

11. Brille (5) nach Anspruch 10, wobei der Rahmen (11) mit dem Zentralteil (1) in dessen erstem Anlenkbereich (7) gelenkig verbunden ist, wobei der Brillenbügel (13) mit dem Zentralteil (1) in dessen zweitem Anlenkbereich (9) gelenkig verbunden ist, und wobei der Rahmen (11), das Zentralteil (1) und der Brillenbügel (13) gemeinsam ein Brillenscharnier (3) der Brille (5) bilden.

12. Brille (5) nach einem der Ansprüche 10 oder 11, wobei zumindest ein Brillenelement, ausgewählt aus dem Brillenbügel (13) und dem Rahmen (11), ein elastisch vorgespanntes Gegenrastelement (39,41) aufweist, das eingerichtet ist, um mit dem dem Brillenelement zugeordneten ersten Rastelement (31) des Zentralteils (1) zusammenzuwirken, um die Ruhestellung zu definieren, und um mit dem dem Brillenelement zugeordneten zweiten Rastelement (33) des Zentralteils (1) zusammenzuwirken, um die Tragestellung zu definieren.

13. Brille (5) nach einem der Ansprüche 10 bis 12, wobei das Gegenrastelement (39,41) als in einer Aufnahmebohrung (43) geführter, federbelasteter Kolben ausgebildet ist, wobei das erste Rastelement (31) und das zweite Rastelement (33) jeweils als Rastausnehmungen ausgebildet sind, in welche der federbelastete Kolben in der jeweils zugeordneten Funktionsstellung, ausgewählt aus der Ruhestellung und der Tragestellung, unter Vorspannung gedrängt ist.

14. Brille (5) nach einem der Ansprüche 10 bis 13, wobei in der Kabelführungsausnehmung (15) des Zentralteils (1) ein Kabel (17), insbesondere ein elektrisches Kabel oder ein optisches Kabel, von dem Brillenbügel (13) zu dem Rahmen (11) geführt ist.

15. Brille (5) nach Anspruch 14, wobei das Kabel (17) als Flachbandkabel oder als FPC-Verbinder ausgebildet ist.

## Claims

1. Central part (1) for an eyeglass hinge (3), having
- a first articulation region (7) adapted to connect the central part (1) in an articulated manner about a first articulation axis (A1) to a frame (11) of eyeglasses (5),
- a second articulation region (9) adapted to articulate the central part (1) about a second articulation axis (A2) to a temple (13) of the eyeglasses (1), and with
- a cable guide opening (15) penetrating the central part (1) perpendicular to the articulation axes (A1, A2), which is adapted for passing a cable (17) from the temple (13) to the frame (11) through the central part (1), and wherein
- the cable guide opening (15) is open at least on one side in the direction of the articulation axes (A1, A2).

2. Central part (1) according to claim 1, wherein the central part (1) has an innerside (19) facing the face of a wearer of the eyeglasses (5) in the mounted state on an eyeglasses (5) and an outerside (21) facing away from the face of the wearer, wherein the cable guide opening (15) is closed towards the outerside (21).

3. Central part (1) according to one of the preceding claims, wherein the central part (1) has, at least in an articulation region (7, 9) selected from the first articulation region (7) and the second articulation region (9), a first latching element (31) for defining a rest position of the temple (13) and a second latching element (33) for defining a wearing position of the temple (13).

4. Central part (1) according to claim 3, wherein at least one latching element (31, 33), selected from the first latching element (31) and the second latching element (33), is configured as a latching recess.

5. Central part (1) according to one of the preceding claims, wherein the central part (1) has in the first articulation region (7) and in the second articulation region (9) in each case a first latching element (31) for defining the rest position of the temple (13) and a second latching element (33) for defining the wearing position of the temple (13).

6. Central part (1) according to one of the preceding claims, wherein the central part (1), viewed in the direction of the articulation axes (A1, A2), has an upperside (25) and an underside (27), wherein the central part (1), at least in an articulation region (7, 9) selected from the first articulation region (7) and the second articulation region (9), preferably in each of the two articulation regions (7,9), at least on one side, selected from the upperside (25) and the underside (27), preferably in each case on the upperside (25) and on the underside (27) or continuously from the upperside (25) to the underside (27), has a screw connection element (35, 37) for establishing the articulated connection with the respectively assigned eyeglass element, selected from the temple (13) and the frame (11).

7. Central part (1) according to claim 6, wherein the screw connection element (35, 37) is configured as a thread or as a through hole.

8. Central part (1) according to one of the preceding claims, wherein the central part (1) is formed from a metal or a plastic, preferably in a metal powder injection molding process or plastic injection molding process, a sintering process, or a generative manufacturing process.

9. Central part (1) according to one of the preceding claims, wherein the cable guide opening (15) is formed open in the direction of the articulation axes (A1, A2) on a first side and closed on an opposite second side, wherein the central part (1) has a bottom side (29) for the cable guide opening (15) on the second side.

10. Eyeglasses (5), having a frame (11) and a temple (13), wherein the temple (13) being connected to the frame (11) via a central part (1) according to one of claims 1 to 9 such that it can pivot between a rest position and a wearing position.

11. Eyeglasses (5) according to claim 10, wherein the frame (11) is in an articulated manner connected to the central part (1) in the first articulation region (7) thereof, wherein the temple (13) is in an articulated manner connected to the central part (1) in the second articulation region (9) thereof, and wherein the frame (11), the central part (1) and the temple (13) jointly form an eyeglass hinge (3) of the eyeglasses (5).

12. Eyeglasses (5) according to one of the claims 10 or 11, wherein at least one eyeglass element selected from the temple (13) and the frame (11) comprises a resiliently biased counter latching element (39, 41) arranged to cooperate with the first latching element (31) of the central part (1) associated with the eyeglass element to define the rest position and to cooperate with the second latching element (33) of the central part (1) associated with the eyeglass element to define the wearing position.

13. Eyeglasses (5) according to one of the claims 10 to 12, wherein the counter latching element (39, 41) is configured as a spring-loaded piston guided in a mounting hole (43), wherein the first latching element (31) and the second latching element (33) are each formed as latching recesses into which the spring-loaded piston is urged under pretension in the respectively associated functional position selected from the rest position and the wearing position.

14. Eyeglasses (5) according to one of the claims 10 to 13, wherein a cable (17), in particular an electrical cable or an optical cable, is guided in the cable guide opening (15) of the central part (1) from the temple (13) to the frame (11).

15. Eyeglasses (5) according to claim 14, wherein the cable (17) is configured as a flat ribbon cable or as an FPC connector.

## Revendications

1. Partie centrale (1) d'une charnière de lunettes (3), comprenant
- une première zone d'articulation (7) qui est conçue pour relier de manière articulée la partie centrale (1) à une monture (11) de lunettes (5) autour d'un premier axe d'articulation (A1),
- une deuxième zone d'articulation (9) qui est conçue pour relier de manière articulée la partie centrale (1) à une branche (13) de lunettes (5) autour d'un deuxième axe d'articulation (A2), et
- un évidement pour le passage d'un câble (15) qui traverse la partie centrale (1) perpendiculairement aux axes d'articulation (A1, A2), qui est conçu pour le passage d'un câble (17) de la branche de lunettes (13) à la monture (11) à travers la partie centrale (1), et dans laquelle
- l'évidement pour le passage d'un câble (15) est ouvert au moins d'un côté dans la direction des axes d'articulation (A1, A2).

2. Partie centrale (1) selon la revendication 1, dans laquelle la partie centrale (1) présente, lorsqu'elle est montée sur des lunettes (5), un côté intérieur (19) tourné vers le visage de la personne portant des lunettes (5) et un côté extérieur (21) détourné du visage de la personne portant des lunettes, dans laquelle l'évidement pour le passage d'un câble (15) est fermé vers le côté extérieur (21).

3. Partie centrale (1) selon l'une des revendications précédentes, dans laquelle la partie centrale (1) présente au moins dans une zone d'articulation (7, 9), choisie parmi la première zone d'articulation (7) et la deuxième zone d'articulation (9), un premier élément d'encliquetage (31) pour définir une position de repos de la branche de lunettes (13) et un deuxième élément d'encliquetage (33) pour définir une position de port de la branche de lunettes (13).

4. Partie centrale (1) selon la revendication 3, dans laquelle au moins un élément d'encliquetage (31, 33), choisi parmi le premier élément d'encliquetage (31) et le deuxième élément d'encliquetage (33), est conçu comme un évidement d'encliquetage.

5. Partie centrale (1) selon l'une des revendications précédentes, dans laquelle la partie centrale (1) présente, dans la première zone d'articulation (7) et dans la deuxième zone d'articulation (9), respectivement un premier élément d'encliquetage (31) pour définir la position de repos de la branche de lunettes (13) et un deuxième élément d'encliquetage (33) pour définir la position de port de la branche de lunettes (13).

6. Partie centrale (1) selon l'une des revendications précédentes, dans laquelle la partie centrale (1) présente, vue dans la direction des axes d'articulation (A1, A2), un côté supérieur (25) et un côté inférieur (27), dans laquelle la partie centrale (1) présente au moins dans une zone d'articulation (7, 9), choisie parmi la première zone d'articulation (7) et la deuxième zone d'articulation (9), de préférence dans les deux zones d'articulation (7, 9), au moins sur un côté, choisi parmi le côté supérieur (25) et le côté inférieur (27), de préférence respectivement sur le côté supérieur (25) et sur le côté inférieur (27) ou de manière continue du côté supérieur (25) jusqu'au côté inférieur (27), un élément de liaison à vis (35, 37) pour établir la liaison articulée avec l'élément de lunettes associé respectif, choisi parmi la branche de lunettes (13) et la monture (11).

7. Partie centrale (1) selon la revendication 6, dans laquelle l'élément de liaison à vis (35, 37) est conçu sous forme de taraudage ou de trou traversant.

8. Partie centrale (1) selon l'une des revendications précédentes, dans laquelle la partie centrale (1) est constituée d'un métal ou d'une matière plastique, de préférence selon un procédé de moulage par injection de poudre métallique ou de moulage par injection de matière plastique, un procédé de frittage ou un procédé de fabrication additive.

9. Partie centrale (1) selon l'une des revendications précédentes, dans laquelle l'évidement pour le passage d'un câble (15) est ouvert dans la direction des axes d'articulation (A1, A2) sur un premier côté et fermé sur un deuxième côté opposé, dans laquelle la partie centrale (1) présente sur le deuxième côté un fond (29) pour l'évidement pour le passage d'un câble (15).

10. Lunettes (5) comprenant une monture (11) et une branche (13), dans lesquelles la branche (13) est reliée à la monture (11) par l'intermédiaire d'une partie centrale (1) selon l'une des revendications 1 à 9 de manière à pouvoir pivoter entre une position de repos et une position de port.

11. Lunettes (5) selon la revendication 10, dans lesquelles la monture (11) est reliée de manière articulée à la partie centrale (1) dans sa première zone d'articulation (7), dans lesquelles la branche (13) est reliée de manière articulée à la partie centrale (1) dans sa deuxième zone d'articulation (9), et dans lesquelles la monture (11), la partie centrale (1) et la branche de lunettes (13) forment ensemble une charnière de lunettes (3) des lunettes (5).

12. Lunettes (5) selon l'une des revendications 10 ou 11, dans lesquelles au moins un élément de lunettes, choisi parmi la branche (13) et la monture (11), présente un élément d'encliquetage (39, 41) élastiquement précontraint qui est conçu pour agir avec le premier élément d'encliquetage (31) de la partie centrale (1) associé à l'élément de lunettes afin de définir la position de repos, et pour agir avec le deuxième élément d'encliquetage (33) de la partie centrale (1) associé à l'élément de lunettes afin de définir la position de port.

13. Lunettes (5) selon l'une des revendications 10 à 12, dans lesquelles l'élément d'encliquetage (39, 41) opposé est conçu comme un piston à ressort guidé dans un alésage de réception (43), dans lesquelles le premier élément d'encliquetage (31) et le deuxième élément d'encliquetage (33) sont chacun conçus comme des évidements d'encliquetage dans lesquels le piston à ressort est poussé sous précontrainte dans la position fonctionnelle respective associée, choisie parmi la position de repos et la position de port.

14. Lunettes (5) selon l'une des revendications 10 à 13, dans lesquelles un câble (17), en particulier un câble électrique ou un câble optique, est acheminé dans l'évidement pour le passage d'un câble (15) de la partie centrale (1) depuis la branche de lunettes (13) vers la monture (11).

15. Lunettes (5) selon la revendication 14, dans lesquelles le câble (17) est conçu comme un câble plat ou comme un connecteur FPC.
